# EUROPÄISCHE PATENTSCHRIFT

(11) **EP 3 507 124 B1**
(45) Veröffentlichungstag und Bekanntmachung des Hinweises auf die Patenterteilung: **07.10.2020**
(21) Anmeldenummer: 17748478.9
(22) Anmeldetag: 03.08.2017
(51) Int. Cl.: B60K 35/00

(54) **VERFAHREN ZUM STEUERN EINER ANZEIGEVORRICHTUNG FÜR EIN KRAFTFAHRZEUG UND KRAFTFAHRZEUG MIT EINER ANZEIGEVORRICHTUNG**
METHOD FOR CONTROLLING A DISPLAY APPARATUS FOR A MOTOR VEHICLE, AND MOTOR VEHICLE HAVING A DISPLAY APPARATUS
PROCÉDÉ DE COMMANDE D'UN DISPOSITIF D'AFFICHAGE POUR UN VÉHICULE À MOTEUR,ET VÉHICULE AUTOMOBILE ÉQUIPÉ D'UN DISPOSITIF D'AFFICHAGE

(30) Priorität: 31.08.2016 DE 102016216415
(43) Veröffentlichungstag der Anmeldung: 10.07.2019
(73) Patentinhaber: Audi AG, 85045 Ingolstadt (DE)
(72) Erfinder: HÉLOT, Jacques, 85051 Ingolstadt (DE); MERTENS, Joris, 85051 Ingolstadt (DE)
(86) Internationale Anmeldenummer: PCT/EP2017/069624
(87) Internationale Veröffentlichungsnummer: WO 2018/041511

(56) Entgegenhaltungen:
- EP-A1- 1 637 386
- DE-A1-102014 205 993
- DE-A1-102014 214 585
- JP-A- 2010 006 092
- JP-A- 2011 213 186
- US-A- 5 698 906

## Beschreibung

Die Erfindung betrifft ein Verfahren gemäß dem Oberbegriff von Patentanspruch 1 zum Steuern einer Anzeigevorrichtung für ein Kraftfahrzeug, und ein Kraftfahrzeug gemäß dem Oberbegriff von Patentanspruch 7 mit einer Anzeigevorrichtung.

Heutzutage sind aus dem Fahrzeugbau vielfältige Arten von Anzeigevorrichtungen und Anzeigeflächen für Kraftfahrzeuge bekannt. Die DE 10 2006 050 016 A1 beschreibt ein Kraftfahrzeug mit einer Sensoranordnung zur Bestimmung einer Blickrichtung eines Fahrers des Kraftfahrzeugs und mit zwei Anzeigevorrichtungen. In Abhängigkeit von der Blickrichtung des Fahrers wird dabei eine Anzeige einer das Kraftfahrzeug betreffenden Information auf der ersten Anzeigevorrichtung oder auf der zweiten Anzeigevorrichtung gesteuert, wobei zur Anzeige der Informationen beispielsweise eine Scheibe des Kraftfahrzeugs genutzt werden kann. Es soll allgemein die Bedienung des Kraftfahrzeugs verbessert werden.

Aus der DE 10 2007 046 971 A1 ist ein Kraftfahrzeug mit einer Anzeige und einer Kamera bekannt, wobei mit der Kamera ein Umgebungsbild eines hinter dem Kraftfahrzeug liegenden Teils der Umgebung des Kraftfahrzeugs aufnehmbar ist, welcher mittels der Anzeige vollständig oder teilweise darstellbar ist. Dabei ist die Anzeige innerhalb des Kraftfahrzeugs derart angeordnet, dass für einen Fahrer des Kraftfahrzeugs das aufgenommene Umgebungsbild hinter einer Seitenscheibe des Kraftfahrzeugs als virtuelles Bild wahrnehmbar ist. Es kann auch als Teil eines Dual-View-Displays eine zweite Anzeige vorgesehen sein, die vom Kraftfahrer direkt als reelles Bild wahrnehmbar ist. Insgesamt soll eine möglichst identische Darstellungsform eines Rückspiegels ohne den Rückspiegel erreicht werden.

Die DE 10 2007 061 723 A1 offenbart ein Verfahren zum Anzeigen von Warnhinweisen in einem Kraftfahrzeug und eine korrespondierende Anzeigeanordnung. Dabei werden zunächst in einer Fahrzeugumgebung Objekte detektiert und dann wenigstens eine optische Anzeigeeinheit aktiviert, wenn ein Objekt in der Fahrzeugumgebung erfasst wurde. Die optische Anzeigeeinheit weist dabei mehrere Anzeigezustände auf, die ein unterschiedliches Kollisionspotenzial darstellen. Neben den Objekten selbst können beispielsweise auch ein Abstand des Objektes vom Fahrzeug, eine relative Geschwindigkeit oder eine relative Bewegungsrichtung des Objektes erfasst werden. Für die Anzeige können etwa verschiedene Helligkeiten, Farbsymbole oder eine Balkenanzeige verwendet werden. Die Anzeigeelemente können beispielsweise innerhalb einer Verkleidung für die A-, B- und/oder C-Säule des Fahrzeugs integriert oder auf diesen Säulen, aber beispielsweise auch am Fahrzeughimmel angeordnet sein. Um den Fahrer nur nach Bedarf über wichtige Ereignisse, Warnungen oder Hinweise zu informieren, ist es vorgesehen, dass die Anzeigeelemente ausgeschaltet sind, wenn kein Objekt detektiert wird.

Weiteren relevanten Stand der Technik zeigt die JP 2010 006092 A.

Aufgabe der vorliegenden Erfindung ist es, ein Verfahren zum Steuern einer Anzeigevorrichtung für ein Kraftfahrzeug und ein Kraftfahrzeug mit einer solchen Anzeigevorrichtung bereitzustellen, welche in unterschiedlichen Situationen eine optimale Darstellung und Erkennbarkeit einer Information bieten.

Diese Aufgabe wird gelöst durch ein Verfahren und ein Kraftfahrzeug gemäß den unabhängigen Patentansprüchen. Vorteilhafte Ausgestaltungen und Weiterbildungen der Erfindung sind in den abhängigen Patentansprüchen angegeben.

Bei dem erfindungsgemäßen Verfahren zum Steuern einer Anzeigevorrichtung für ein Kraftfahrzeug, welche eine Anzeigefläche umfasst, wird auf der Anzeigefläche eine Information dargestellt. Das Kraftfahrzeug weist dabei einen durch eine Außenhülle gegen eine Umgebung des Kraftfahrzeugs abgegrenzten Fahrgastraum auf, wobei die Außenhülle zur Umgebung hin eine Öffnung aufweist und die Öffnung mittels einer beweglichen Verschlusseinrichtung verschließbar ist. Die Öffnung stellt also eine Durchgangsöffnung beispielsweise einer Seitenwand oder auch eines Daches des Kraftfahrzeugs dar und die Verschlusseinrichtung kann bewegt werden, um die Öffnung ganz oder teilweise freizugeben oder zu verschließen, abzudecken oder zu verdecken. Die Verschlusseinrichtung kann beispielsweise eine verschwenkbare Tür, eine Schiebetür, eine Flügeltür, eine Heckklappe oder im Falle einer Dachöffnung ein Schiebe- oder Klappdach, oder dergleichen sein. Demnach kann die Verschlusseinrichtung beispielsweise schwenkbar, verschwenkbar, verschiebbar oder versenkbar oder in ähnlicher Weise bewegbar sein. Die Anzeigefläche ist an dieser beweglichen Verschlusseinrichtung angeordnet

Um eine optimale Darstellung und Erkennbarkeit der dargestellten Information zu bieten, ist es erfindungsgemäß vorgesehen, dass die Darstellung der Information in Abhängigkeit von einem mittels eines Stellungssensors des Kraftfahrzeugs erfassten Öffnungsgrad der Verschlusseinrichtung gesteuert wird. Denn es wird bei einem Bewegen, das heißt bei einem vollständigen oder teilweisen Öffnen oder Schließen der Verschlusseinrichtung die Anzeigefläche zusammen mit der Verschlusseinrichtung relativ zum übrigen Kraftfahrzeug - beispielsweise relativ zu dem Fahrgastraum oder einem Innenraum des Kraftfahrzeugs - bewegt. Damit ändert sich in aller Regel auch eine Blickrichtung oder ein Winkel, unter welcher beziehungsweise unter welchem die Anzeigefläche von einem Fahrzeuginsassen betrachtet oder gesehen wird. Der Öffnungsgrad der Verschlusseinrichtung kann beispielsweise zwischen einer Schließstellung der Verschlusseinrichtung und einer aktuellen, momentanen Stellung der Verschlusseinrichtung und/oder zwischen dieser momentanen Stellung und einem Rahmenteil des Kraftfahrzeugs bestehen oder gemessen werden. Durch den Öffnungsgrad kann eine bestimmte Stellung der Verschlusseinrichtung beschrieben werden und beispielsweise als Türöffnungswinkel, als Schiebestellung einer Schiebetür oder eine Schiebedaches, oder dergleichen verstanden werden.

Bei der Steuerung der Darstellung kann der jeweils aktuelle Öffnungsgrad, der sich bei einer Bewegung der Verschlusseinrichtung auch kontinuierlich ändern kann, berücksichtigt werden, um eine optimale Anpassung der Darstellung und somit eine bei jeder Position oder Stellung der Verschlusseinrichtung jeweils anders eingestellte Anzeige der Information zu gewährleisten. Hierbei kann beispielsweise ein, insbesondere in dem Innenraum des Kraftfahrzeugs angeordneter oder verorteter Referenzpunkt berücksichtigt werden. Dieser Referenzpunkt kann beispielsweise einer typischen Position eines Kopfes eines Fahrzeuginsassen entsprechen und relativ zu einem nicht verschwenkbaren Bauteil des Kraftfahrzeugs, wie beispielsweise dem Rahmen, definiert sein. Durch die Berücksichtigung des Öffnungsgrads der Verschlusseinrichtung bei der Darstellung der Information bleibt diese vorteilhaft unabhängig vom jeweils aktuellen Öffnungsgrad der Verschlusseinrichtung jederzeit für den Fahrzeuginsassen erkennbar oder ablesbar. Dadurch kann auch -je nach Art der dargestellten Information - ein Bedien- oder Benutzungskomfort der Anzeigevorrichtung aber beispielsweise auch eine Sicherheit bei der Handhabung oder Benutzung des Kraftfahrzeugs verbessert werden.

Als Anzeigefläche kann eine Fensterscheibe der Verschlusseinrichtung, das heißt also beispielsweise eine Seitenscheibe oder ein Glaselement eines Schiebedaches des Kraftfahrzeugs, verwendet werden, welche hierzu vollflächig oder in einem Teilbereich als Bildschirm oder Projektionsfläche ausgestaltet oder eingerichtet sein können. Bevorzugt ist an oder in der Fensterscheibe ein transparenter, aktiver Bildschirm, beispielsweise basierend auf einer OLED-Technologie (englisch "organic light emitting diode") angeordnet oder vorgesehen.

Die Anzeigefläche kann aber beispielsweise auch an oder in einem anderen Bereich der Verschlusseinrichtung angeordnet und beispielsweise in eine Innenverkleidung integriert sein und ebenso ist es denkbar, dass mehrere aneinander angrenzende oder voneinander beabstandete Anzeigeflächen an der Verschlusseinrichtung vorgesehen oder angeordnet sind.

Im Rahmen der vorliegenden Erfindung sollen die Begriffe der Information und der Darstellung der Information bevorzugt breit ausgelegt und verstanden werden. So kann eine Information beispielsweise einer Unterrichtung des oder der Fahrzeuginsassen über bestimmte Fakten und/oder auch einer Unterhaltung des oder der Fahrzeuginsassen dienen. Für die Darstellung können dabei zumindest nahezu beliebige Mittel und Elemente eingesetzt werden. Es ist beispielsweise eine Verwendung von beliebigen Kombinationen von Symbolen, grafischen Elementen, strukturellen Elementen, Texten, Bewegtbildern und dergleichen mehr denkbar. Prinzipiell ist auch beispielsweise eine Darstellung von, insbesondere flächigen, geometrischen Formen denkbar, durch die ein entsprechender Teilbereich der Anzeigefläche, insbesondere der Fensterscheibe, abgedunkelt wird, denkbar. Dadurch kann ein bestimmter Bereich einer Umgebung des Kraftfahrzeugs aus Sicht oder Perspektive des oder der Fahrzeuginsassen verdeckt werden und/oder es kann ein bestimmter visueller Effekt oder Eindruck - auch aber nicht notwendigerweise unter Berücksichtigung der Umgebung - erweckt werden.

In der Ausgestaltung des erfindungsgemäßen Verfahrens ist es vorgesehen, dass in Abhängigkeit von dem Öffnungsgrad der Verschlusseinrichtung eine Geometrie der Darstellung der Information gesteuert wird. Mit anderen Worten kann also dieselbe Information mit zumindest prinzipiell denselben oder zumindest mit ähnlichen Mitteln und Elementen dargestellt werden, die lediglich in ihrer Geometrie angepasst oder verändert sind oder werden. Unter dem Begriff der Geometrie können dabei verschiedene Faktoren und Parameter verstanden werden und zusammengefasst sein, wie beispielsweise eine Größe, eine Form, ein Dreh- und/oder Kippwinkel oder dergleichen mehr. Da es sich bei dem Verschwenken der Verschlusseinrichtung relativ zu dem übrigen Fahrzeug und/oder relativ zu dem Fahrzeuginsassen in erster Linie um eine räumliche oder geometrische Veränderung handelt, kann auf diese Weise, das heißt durch die entsprechende Steuerung der Geometrie der Darstellung, optimal auf die jeweilige Situation reagiert werden. Somit ist also durch die Steuerung oder Anpassung der Geometrie der Darstellung beispielsweise ein Ausgleich oder eine Kompensation der durch die Schwenkbewegung oder den Öffnungsgrad der Verschlusseinrichtung hervorgerufene oder bewirkte Veränderung im Aussehen oder in der Wahrnehmung der Information oder der Darstellung der Information aus Sicht oder Perspektive des oder der Fahrzeuginsassen möglich.

In weiterer Ausgestaltung des erfindungsgemäßen Verfahrens ist es vorgesehen, dass eine perspektivische Verzerrung der Darstellung der Information zur Kompensation des Öffnungsgrads bezogen auf eine vorbestimmte Betrachtungsrichtung und/oder einen vorbestimmten Betrachtungsort in Abhängigkeit von dem Öffnungsgrad gesteuert wird. Als vorbestimmter Betrachtungsort kann beispielsweise eine typische Kopfposition eines Fahrzeuginsassen bestimmt oder definiert sein, von der aus eine gedachte gerade Verbindung zu der Anzeigefläche die vorbestimmte Betrachtungsrichtung festlegen kann. Durch eine gezielte Steuerung der perspektivischen Verzerrung der Darstellung kann vorteilhaft der wesentliche Effekt der Veränderung des Aussehens oder der Wahrnehmung oder der Wahrnehmbarkeit der Darstellung der Information durch das Verschwenken der Verschlusseinrichtung kompensiert oder ausgeglichen werden. Dadurch kann vorteilhaft sichergestellt werden, dass die Darstellung der Information für den jeweiligen Fahrzeuginsassen unabhängig von dem Öffnungsgrad oder einer Bewegung der Verschlusseinrichtung gleich aussieht. Dies ermöglicht weiterhin eine besonders schnelle, komfortable und einfache sowie sichere Wahrnehmbarkeit und Erkennbarkeit der Information durch den Fahrzeuginsassen.

Im Rahmen der Anpassung der Geometrie und/oder der perspektivischen Verzerrung der Darstellung kann diese auch ge- oder verdreht werden.

Alternativ ist in der Ausgestaltung des erfindungsgemäßen Verfahrens vorgesehen, dass in Abhängigkeit von dem Öffnungsgrad ein Inhalt der dargestellten Information gesteuert wird. Mit anderen Worten wird hier also nicht nur dieselbe Information in einer angepassten Form oder Gestalt oder Geometrie angezeigt, sondern es wird eine auch inhaltlich andere und/oder in ihrer Bedeutung verschiedene Information dargestellt. Dabei kann es sich um eine vollständig andere Information aber auch um eine Ergänzung oder Anpassung einer bereits bestehenden dargestellten Information handeln. Dadurch kann besonders vorteilhaft gezielt eine nur in der jeweiligen Situation relevante Informationen angezeigt werden, so das zu anderen Zeitpunkten oder bei einem anderen Öffnungsgrad die jeweilige Information nicht unnötigerweise dargestellt wird. Durch diese situationsangepasste Auswahl der dargestellten oder darzustellenden Information oder Informationen kann vorteilhaft eine Aufmerksam eines jeweiligen Fahrzeuginsassen besser auf die situationsrelevant dargestellten Information gelenkt werden.

In weiterer Ausgestaltung des erfindungsgemäßen Verfahrens ist es vorgesehen, dass mittels einer Sensoreinrichtung eine Blickrichtung eines Fahrzeuginsassen erfasst und die Darstellung der Information zur Kompensation des Öffnungsgrads der Verschlusseinrichtung in Abhängigkeit von der erfassten Blickrichtung gesteuert wird. Mit anderen Worten wird für die Darstellung der Information also sowohl der Öffnungsgrad der Verschlusseinrichtung als auch die Blickrichtung des Fahrzeuginsassen und gegebenenfalls eine Position des Fahrzeuginsassen ausgewertet und berücksichtigt. Dies ist besonders vorteilhaft, da mit einem Verschwenken, also beispielsweise mit einem Öffnen oder einem Schließen der Verschlusseinrichtung oftmals auch eine Bewegung oder Positionsveränderung des Fahrzeuginsassen einhergeht. Somit kann durch die zusätzliche Berücksichtigung der Blickrichtung des Fahrzeuginsassen ein tatsächlicher Betrachtungswinkel der dargestellten oder darzustellenden Information ermittelt werden. Dies wiederum ermöglicht eine verbesserte Steuerung oder Anpassung der Darstellung an die jeweilige Situation.

In weiterer Ausgestaltung des erfindungsgemäßen Verfahrens ist es vorgesehen, dass zumindest ein Teil einer Umgebung des Kraftfahrzeugs mittels einer Umgebungserfassungsvorrichtung des Kraftfahrzeugs erfasst und zumindest ein Teil der erfassten Umgebung auf der Anzeigefläche dargestellt wird. Mit anderen Worten kann also durch die Umgebungserfassungsvorrichtung und die Anzeigevorrichtung eine Funktionalität realisiert oder übernommen werden, die bisher typischerweise von einem Rück- und/oder Seitenspiegel des Kraftfahrzeugs erfüllt oder bereitgestellt wird. Die Anzeigefläche kann also als virtueller Rück- und/oder Seitenspiegel fungieren und dies ist hier besonders vorteilhaft, da bei einem Bewegen, insbesondere bei einem Verschwenken der Verschlusseinrichtung besonders gefährliche Situationen und Interaktionen mit der Umgebung des Kraftfahrzeugs und dort befindlichen Objekten und Personen auftreten können. Weiterhin kann bei heutzutage üblichen typischen Anordnungen ein an der Verschlusseinrichtung angeordneter Seitenspiegel seine eigentliche Funktion oder Aufgabe für den Fahrzeuginsassen, insbesondere bei einem Öffnen aber allgemein auch bei einer Anordnung der Verschlusseinrichtung außerhalb ihrer Schließstellung, nicht oder nicht vollumfänglich erfüllen. Durch die Darstellung zumindest eines Teils der erfassten Umgebung auf der Anzeigefläche kann also die Sicherheit beim Betrieb des Kraftfahrzeugs vorteilhaft erhöht werden.

In weiterer Ausgestaltung des erfindungsgemäßen Verfahrens ist es vorgesehen, dass zumindest ein Teil einer Umgebung des Kraftfahrzeugs mittels einer Umgebungserfassungsvorrichtung des Kraftfahrzeugs erfasst wird, von der Umgebungserfassungsvorrichtung erfasste Daten hinsichtlich einer Kollisionsgefahr ausgewertet werden und im Falle einer erkannten Kollisionsgefahr bei einem Öffnen der Verschlusseinrichtung auf der Anzeigefläche eine Warnung dargestellt wird. Eine derartige Warnung kann beispielsweise in Gestalt eines Symbols, einer Grafik und/oder eines Textes oder Wortes dargestellt werden. Die Kollisionsgefahr kann beispielsweise auf Grundlage oder unter Berücksichtigung einer erfassten Relativbewegung zwischen dem Kraftfahrzeug und einem Objekt oder einer Person in der erfassten Umgebung des Kraftfahrzeugs und/oder einer Position des Objekts oder der Person und/oder einer projektierten Bewegungsrichtung oder Trajektorie des Objekts oder der Person ermittelt oder erkannt oder definiert werden. Besonders vorteilhaft kann die Warnung derart dargestellt werden, dass sie sowohl von dem oder den jeweiligen Fahrzeuginsassen als auch von einer erfassten Person in der Umgebung des Kraftfahrzeugs und/oder weiteren Personen wahrgenommen werden kann. Hierzu kann beispielsweise eine Helligkeit der Darstellung der Warnung angepasst und beispielsweise auf einen maximalen Wert eingestellt werden. Ebenso ist es denkbar, dass die Warnung nicht kontinuierlich, sondern intervallartig oder blinkend dargestellt wird, wodurch ihre Wahrnehmbarkeit verbessert werden kann. Es ist auch denkbar, eine erkannte Kollisionsgefahr auf einer relativen Skala einzuordnen oder anhand einer relativen Skala zu bewerten und in Abhängigkeit von der jeweiligen Einordnung oder Bewertung die Darstellung der Warnung anzupassen - beispielsweise in ihrer Helligkeit, ihrer Größe oder etwa ihrer Blinkfrequenz. Die Nutzung der an der Verschlusseinrichtung angeordneten Anzeigefläche zur Darstellung einer solchen Warnung ist besonders vorteilhaft, da sich die Tür und damit auch die Anzeigefläche - insbesondere bei einem potentiell besonders gefährlichen Öffnen der Verschlusseinrichtung -in einem typischen Blickfeld oder in einer typischen Blickrichtung des jeweiligen Fahrzeuginsassen befinden.

In weiterer Ausgestaltung des erfindungsgemäßen Verfahrens ist es vorgesehen, dass die Anzeigefläche zwischen wenigstens einer Gebrauchsstellung und einer Nichtgebrauchsstellung verstellbar ist. Die Anzeigefläche wird dann beim Öffnen der Verschlusseinrichtung zur Darstellung der Information selbsttätig aus der Nichtgebrauchsstellung in die Gebrauchsstellung verstellt, sofern sich die Anzeigefläche zu Beginn der entsprechenden Öffnungsbewegung in der Nichtgebrauchsstellung befindet.

Die Gebrauchsstellung zeichnet sich dadurch aus, dass die Anzeigefläche für den Fahrzeuginsassen zumindest teilweise direkt sichtbar ist. Mit anderen Worten ist also die auf der Anzeigefläche dargestellte Information in der Gebrauchsstellung unmittelbar und ungehindert aus dem Fahrzeuginnenraum oder aus einem Fahrgastraum des Kraftfahrzeugs einsehbar. Dabei können durchaus mehrere Gebrauchsstellungen der Anzeigefläche vorgesehen sein, welche sich beispielsweise in einem Anteil oder einer Größe eines einsehbaren Flächenbereiches der Anzeigefläche unterscheiden können. In der Nichtgebrauchsstellung hingegen ist die Anzeigefläche nicht einsehbar. In der Nichtgebrauchsstellung kann die Anzeigefläche z.B. verdeckt und/oder in einem Schacht versenkt sein.

Durch die selbsttätige oder automatische Verstellung der Anzeigefläche kann vorteilhaft sichergestellt werden, dass ohne weitere Bedienhandlungen des Fahrzeuginsassen beim Öffnen der Verschlusseinrichtung die Information dem Fahrzeuginsassen dargestellt oder angezeigt werden kann. Dies kann vorteilhaft die Sicherheit erhöhen, da so beispielsweise Warnungen oder besonders situationsrelevante Hinweise zuverlässig dargestellt werden können. Es ist denkbar, dass je nach darzustellender Information die Anzeigefläche in eine bestimmte von mehreren zur Verfügung stehenden Gebrauchsstellung verstellt wird, sodass sichergestellt ist, dass die darzustellende Information zumindest in einer vorbestimmten Mindestgröße darstellbar und einsehbar ist. Bevorzugt kann dabei bereits während einer Verstellbewegung der Anzeigefläche die Information ganz oder teilweise oder in einer von mehreren Detailstufen oder Varianten dargestellt werden. Mit durch die Verstellung der Anzeigefläche zunehmender Größe des einsehbaren Teilbereiches der Anzeigefläche kann die Darstellung der Information in Abhängigkeit von dieser Größe des jeweils zur Verfügung stehenden einsehbaren Teilbereiches angepasst werden. Dadurch wird erreicht, dass die Information so früh oder so schnell wie möglich nach Beginn des Öffnens der Verschlusseinrichtung dargestellt wird und sichtbar ist. Gleichzeitig wird vorteilhaft dynamisch eine jeweils optimale Darstellung der Information erzielt.

Ein erfindungsgemäßes Kraftfahrzeug weist eine Anzeigevorrichtung auf, welche eine Anzeigefläche umfasst und zur Darstellung einer Information auf dieser Anzeigefläche eingerichtet ist. Das Kraftfahrzeug weist dabei einen durch eine Außenhülle gegen eine Umgebung des Kraftfahrzeugs abgegrenzten Fahrgastraum auf, wobei die Außenhülle zur Umgebung hin eine Öffnung aufweist und die Öffnung mittels einer beweglichen Verschlusseinrichtung verschließbar ist. Die Anzeigefläche ist an der beweglichen Verschlusseinrichtung des Kraftfahrzeugs angeordnet. Um eine optimale Darstellung und Erkennbarkeit der dargestellten oder darzustellenden Information zu bieten, ist es erfindungsgemäß vorgesehen, dass das Kraftfahrzeug einen Stellungssensor zur Erfassung eines Öffnungsgrads der Verschlusseinrichtung umfasst und die Anzeigevorrichtung dazu eingerichtet ist, die Darstellung der Information in Abhängigkeit von dem erfassten Öffnungsgrad zu steuern.

Weitere Einzelheiten, Merkmale und Vorteile der vorliegenden Erfindung ergeben sich aus der nachfolgenden Beschreibung eines bevorzugten Ausführungsbeispiels sowie anhand der Zeichnung. Dabei zeigen:
- Fig. 1: eine schematische und ausschnittweise Perspektivansicht eines Innenraumes eines Kraftfahrzeugs mit einer Tür, deren Fensterscheibe als Anzeigefläche ausgestaltet ist;
- Fig. 2: eine schematische und ausschnittweise Perspektivansicht einer geöffneten Tür eines Kraftfahrzeugs;
- Fig. 3: eine schematische Darstellung einer Fensterscheibe einer Kraftfahrzeugtür mit einer unverzerrt dargestellten Information;
- Fig.4: eine schematische Perspektivdarstellung einer Kraftfahrzeugtür mit einem Seitenspiegel und einer auf der als Anzeigefläche ausgestalteten Fensterscheibe dargestellten Warnung;
- Fig. 5: eine schematische Perspektivdarstellung einer Kraftfahrzeugtür mit einer als Anzeigefläche ausgestalteten und teilweise in der Kraftfahrzeugtür versenkten Fensterscheibe;
- Fig. 6: zeigt eine schematische Perspektivansicht eines Teils eines Kraftfahrzeugs mit einer Scherentür;
- Fig. 7: zeigt eine ausschnittweise und schematische Perspektivansicht eines Kraftfahrzeugs mit einer Schiebetür; und
- Fig. 8: zeigt eine ausschnittweise und schematische Perspektivansicht auf ein Dach eines Kraftfahrzeugs, welches eine Dachöffnung oder ein Dachfenster mit einem Schiebedach aufweist.

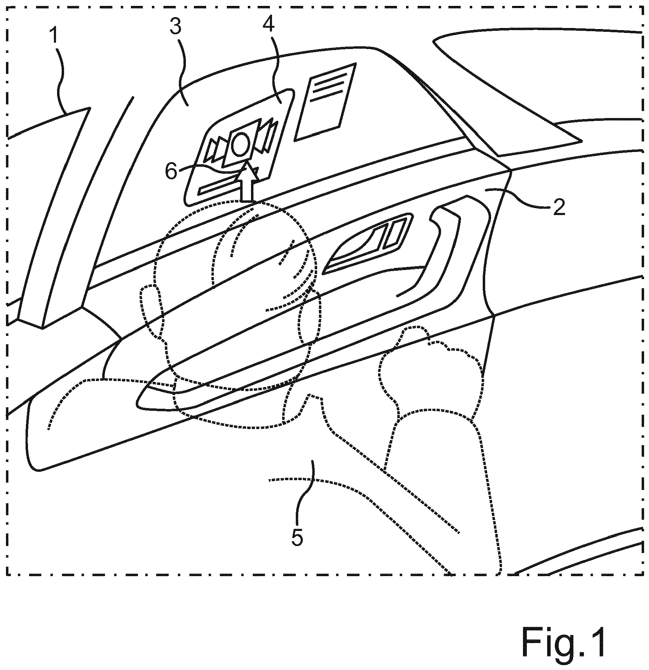

Fig. 1 zeigt in einer schematischen und ausschnittsweisen Perspektivdarstellung einen Fahrgastraum oder Innenraum eines Kraftfahrzeugs 1. Eine Seitenwand des Kraftfahrzeugs 1 weist eine Öffnung auf, bei welcher es sich vorliegend um eine Türöffnung handelt. Diese Türöffnung ist durch ein bewegliches Verschlusselement verschließbar, welches vorliegend als Tür 2, ausgebildet ist und welches eine Fensterscheibe 3 aufweist. Die Tür 2 ist dabei schwenkbar gelagert, das heißt sie ist öffenbar und schließbar. Die an sich transparente Fensterscheibe 3 ist vorliegend als Anzeigefläche einer Anzeigevorrichtung des Kraftfahrzeugs 1 ausgebildet und weist dazu beispielsweise einen transparenten Bildschirm (Display) auf. Dieser Bildschirm kann auch annäherungs- und/oder berührungsempfindlich, das heißt durch Berührung bedienbar sein (Touchscreen). Vorliegend ist hier eine Darstellung 4 einer Information auf der Fensterscheibe 3 angezeigt. Die Information kann dabei auch aus mehreren Teilinformationen zusammengesetzt und beispielsweise eine Kombination von Symbolen, grafischen Elementen und Text sein. Weiterhin ist ein Fahrzeuginsasse 5 dargestellt, welcher sich hier in dem Innenraum oder Fahrgastraum des Kraftfahrzeugs 1 und neben der Tür 2 aufhält. Eine Blickrichtung des Fahrzeuginsassen 5 in Richtung der Fensterscheibe 3 und der Darstellung 4 ist durch einen Pfeil 6 angedeutet.

Aus dem Fahrzeugbau sind bereits vielfältige Varianten von an oder in einem Kraftfahrzeug 1 angeordneten Anzeigeflächen bekannt. Derartige bekannte Anzeigeflächen sind jedoch typischerweise ortsfest oder unbeweglich montiert oder angeordnet, während im vorliegenden Fall die Tür 2 und damit auch die Fensterscheibe 3 und die Darstellung 4 durch die Verschwenkbarkeit der Tür 2 beweglich sind. Bei einem Bewegen oder Verschwenken der Tür 2 ändert sich also die Perspektive, unter der der Fahrzeuginsasse 5 die Darstellung 4 sieht.

Aus diesem Grund ist es vorliegend vorgesehen, dass die Darstellung 4 in Abhängigkeit von einem mittels eines Stellungssensors - hier eines Türwinkelsensors - des Kraftfahrzeugs 1 erfassten Schwenkwinkel der Tür 2 gesteuert wird. Zusätzlich ist es vorliegend vorgesehen, dass das Kraftfahrzeug 1 eine Sensoreinrichtung aufweist, mittels welcher die Blickrichtung 6 des Fahrzeuginsassen 5 erfasst wird. Auch diese erfasste Blickrichtung 6 wird dann bei der Steuerung der Darstellung 4 mit verarbeitet oder berücksichtigt. Diese Sensoreinrichtung kann beispielsweise eine Kamera oder eine Mehrzahl von Kameras umfassen, welche innerhalb des Kraftfahrzeugs 1 angeordnet und mit einer elektronischen Auswerteeinrichtung direkt oder indirekt verbunden sind. Durch diese Auswerteeinrichtung können mittels der Kamera oder Kameras aufgenommene Daten ausgewertet werden, um die Blickrichtung 6 des Fahrzeuginsassen 5 zu erkennen und/oder nachzuverfolgen (Eye-Tracking).

Das Kraftfahrzeug 1 kann beispielsweise ein pilotiertes, ganz oder teilweise autonom oder hochautomatisiert fahrendes oder betreibbares Fahrzeug sein. Hier kann insbesondere die zusätzliche Erfassung und Berücksichtigung der Blickrichtung 6 besonders vorteilhaft sein, da die jeweiligen Fahrzeuginsassen innerhalb eines solchen Fahrzeugs nicht notwendigerweise bekannte oder feste Positionen einnehmen.

Die Darstellung 4 wird dabei in Abhängigkeit von dem jeweils aktuellen Schwenkwinkel der Tür 2 in ihrer Geometrie angepasst, insbesondere indem eine perspektivische Verzerrung angepasst der Darstellung 4 angepasst oder eingestellt wird, um aus der Perspektive oder Sicht des Fahrzeuginsassen 5 effektiv eine möglichst gut erkennbare und unverzerrte Form der Darstellung 4 zu erzielen. Die Anpassung oder Veränderung der Geometrie und der perspektivischen Verzerrung kann beispielsweise im Vergleich oder relativ zu einer Darstellungsform der Information erfolgen oder definiert sein, welche für einen Betrachter unverzerrt erscheinen würde, dessen Blickrichtung eine Flächennormale der Fensterscheibe 3 darstellt, die also senkrecht auf die Anzeigefläche gerichtet ist. Wie vorliegend gut erkennbar, ist demgegenüber die Blickrichtung 6 des Fahrzeuginsassen 5 nicht senkrecht, sondern unter einem spitzen Winkel auf die Fensterscheibe 3 und die Darstellung 4 gerichtet.

Dieser Winkel zwischen der Betrachtung-oder Blickrichtung 6 des Fahrzeuginsassen 5 und der Fensterscheibe 3 ändert sich zudem beim Verschwenken der Tür 2.

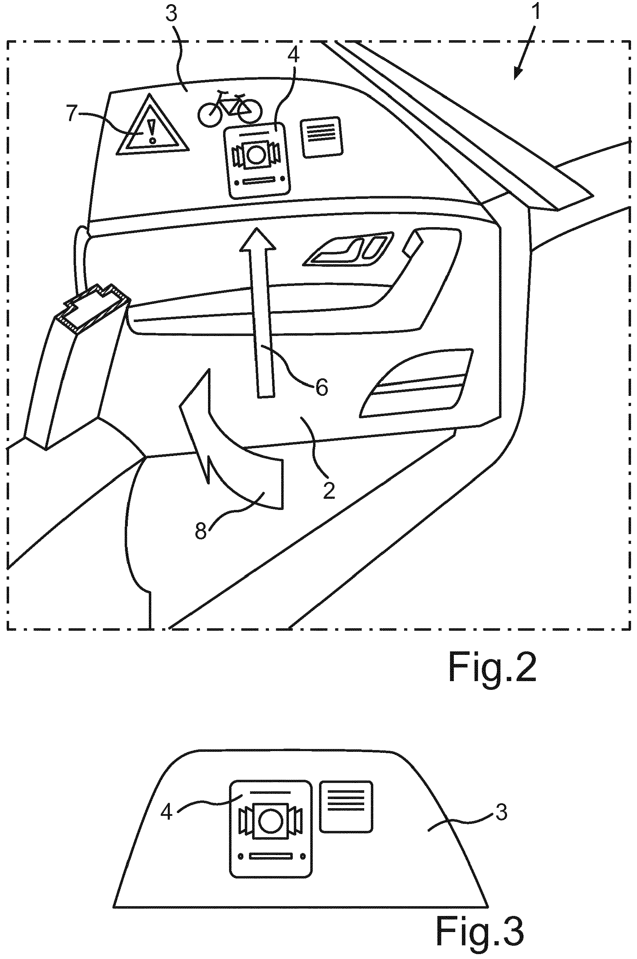

Fig. 2 zeigt in einer schematischen ausschnittweisen Perspektivdarstellung die Tür 2 des Kraftfahrzeugs 1 in einer gegenüber ihrer in Fig. 1 dargestellten Schließstellung verschwenkten Offenstellung. Die entsprechende Verschwenkbewegung, das heißt das entsprechende Öffnen der Tür 2 ist hier durch einen Pfeil 8 angedeutet. Aus Sicht des hier nicht dargestellten Fahrzeuginsassen 5 hat sich nunmehr gegenüber der in Fig. 1 dargestellten Situation der Betrachtungswinkel zwischen der Blickrichtung 6 und der Fensterscheibe 3 und damit auch der Darstellung 4 geändert. Durch die den Schwenkwinkel der Tür 2 berücksichtigende Steuerung der Darstellung 4 wird der Schwenkwinkel, und damit die durch das Verschwenken der Tür 2 hervorgerufene Veränderung in dem Betrachtungswinkel kompensiert. Dadurch zeigt sich die Darstellung 4 also unabhängig von dem Schwenkwinkel der Tür 2 dem Fahrzeuginsassen 5 aus seiner Sicht oder Perspektive jederzeit in unverzerrter Form oder Gestalt. Sie ist dadurch als optimal und in sozusagen natürlicher Form oder Gestalt erkennbar.

Eine unverzerrte Referenzform oder -gestalt der Darstellung 4 auf der Fensterscheibe 3 ist in einer schematischen Ansicht in Fig. 3 gezeigt.

Vorliegend ist es weiterhin vorgesehen, dass das Kraftfahrzeug 1 eine Umgebungserfassungsvorrichtung aufweist, mittels welcher zumindest ein Teil einer Umgebung des Kraftfahrzeugs erfasst oder sensiert werden kann. Die Umgebungserfassungsvorrichtung kann dazu beispielsweise eine Kamera oder eine Mehrzahl von Kameras und/oder weitere Sensoren umfassen. Von der Umgebungserfassungsvorrichtung gelieferte Daten werden von einem Steuergerät des Kraftfahrzeugs 1 insbesondere hinsichtlich einer Objekt- und/oder Personenerkennung und einer Kollisionsgefahr zwischen einem erkannten Objekt oder einer erkannten Person und dem Kraftfahrzeug 1 ausgewertet. Es können insbesondere Fußgänger, Radfahrer und andere Fahrzeuge erkannt werden. Wird die Tür 2 geöffnet und ist oder wird eine Kollisionsgefahr erkannt, so wird eine entsprechende Warnung 7 auf der Anzeigefläche der Fensterscheibe 3 dargestellt. Die Warnung 7 kann zusätzlich zu der Darstellung 4 der Information erfolgen, die Darstellung 4 verändern oder auch die Darstellung 4 ersetzen. Als Teil der Warnung 7 kann beispielsweise ein Gefahren-oder Hinweissymbol und/oder ein Bild oder eine Repräsentation des erkannten Objekts oder der erkannten Person dargestellt werden. Es wird also die Darstellung 4 bezüglich oder hinsichtlich ihres Inhaltes gesteuert.

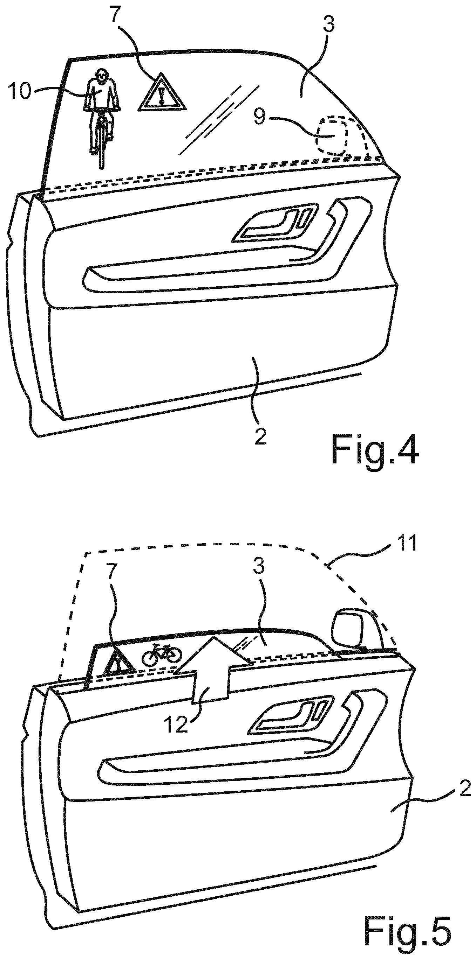

Fig. 4 zeigt eine schematische Perspektivdarstellung der Tür 2, welche vorliegend einen Außen- oder Seitenspiegel 9 umfasst. Aus Sicht eines Fahrzeuginsassen 5 kann ein für eine Kollisionsgefahr besonders relevanter Teilbereich der Umgebung des Kraftfahrzeugs 1 mithilfe des Seitenspiegels 9 zwar beobachtet werden wenn sich die Tür 2 in Schließstellung befindet, nicht jedoch beim Öffnen der Tür 2 oder wenn sich die Tür 2 in einer Offenstellung befindet.

Der Begriff oder die Formulierung "beim Öffnen" ist dabei im Sinne der vorliegenden Erfindung nicht auf Bewegungen der Tür 2 aus ihrer Schließstellung heraus oder bis in einen maximalen Schwenkwinkel hinein beschränkt. Entsprechendes gilt für den Begriff "beim Schließen" der Tür 2 und alternative sinngemäße Formulierungen.

Da also insbesondere beim Öffnen der Tür 2 die Umgebung des Kraftfahrzeugs 1 und eine mögliche Kollisionsgefahr von dem Fahrzeuginsassen 5 mithilfe des Seitenspiegel 9 nicht zuverlässig erkennbar ist, ist es vorliegend vorgesehen, dass zumindest ein Teil der von der Umgebungserfassungsvorrichtung erfassten Umgebung des Kraftfahrzeugs 1 auf der Fensterscheibe 3 dargestellt wird. Hierdurch wird also die Funktion des Seitenspiegel 9 unterstützt oder ersetzt, in dem die Umgebungserfassungsvorrichtung und die Anzeigefläche wie ein virtueller Rück- oder Seitenspiegel 9 wirken.

Die Anzeige der Warnung 7 und/oder einer Umgebungsdarstellung 10 kann dabei ebenfalls in Abhängigkeit von dem Schwenkwinkel der Tür 2 gesteuert werden. Beispielsweise können die Warnung 7 und/oder die Umgebungsdarstellung 10 nur beim Öffnen der Tür 2 und/oder dann aktiviert werden oder sein, wenn sich die Tür 2 in einer Offenstellung befindet.

Da vorliegend die Fensterscheibe 3 der Tür 2 als Anzeigefläche verwendet wird, kann es problematisch sein, wenn eine Information, insbesondere die Warnung 7, angezeigt oder dargestellt werden soll, während sich die Fensterscheibe 3 in einer Nichtgebrauchsstellung befindet. In der Nichtgebrauchsstellung der Fensterscheibe 3 oder der Anzeigefläche kann die Fensterscheibe 3 beispielsweise in der Tür 2 versenkt und somit nicht für den Fahrzeuginsassen 5 einsehbar sein. Vorliegend ist es deshalb vorgesehen, dass ein Zustand oder eine Position der Fensterscheibe 3 durch eine entsprechende Sensorik des Kraftfahrzeugs 1 erkannt und/oder überwacht wird. Beim Öffnen der Tür 2 wird dann die Fensterscheibe 3 selbsttätig oder automatisch aus der Nichtgebrauchsstellung in eine Gebrauchsstellung verstellt, in der zumindest ein Teilbereich der Anzeigefläche von dem Fahrzeuginsassen 5 einsehbar ist.

Fig. 5 zeigt hierzu eine schematische Perspektivdarstellung der Tür 2, wobei die Fensterscheibe 3 teilweise in der Tür 2 versenkt ist, sodass zumindest ein Teilbereich der Anzeigefläche verdeckt und nicht von dem Fahrzeuginsassen 5 einsehbar ist. Das automatische Verstellen der Fensterscheibe 3 aus der Nichtgebrauchsstellung heraus ist hier durch einen Pfeil 12 angedeutet. Ebenfalls angedeutet ist durch eine Kontur 11 eine Gebrauchsstellung der Fensterscheibe 3, in der die gesamte Anzeigefläche unverdeckt und von dem Fahrzeuginsassen 5 einsehbar ist. Es ist jedoch nicht notwendigerweise vorgesehen, dass die Fensterscheibe 3 automatisch vollständig bis in diese, durch die Kontur 11 angedeutete Position oder Stellung verstellt wird.

Vorteilhaft wird die Information, insbesondere die Warnung 7, beim automatischen Verstellen der Fensterscheibe 3 beim Öffnen der Tür 2 angezeigt, sobald eine für eine erkennbare Darstellung ausreichende Fläche oder Größe der Anzeigefläche zur Verfügung steht, das heißt von dem Fahrzeuginsassen 5 einsehbar ist. Hierfür kann beispielsweise eine bestimmte Minimalposition der Fensterscheibe 3 oder eine Minimalgröße eines sichtbaren oder einsehbaren Teilbereiches der Anzeigefläche definiert oder vorgegeben sein. Besonders bevorzugt wird die Warnung 7, die Information und/oder die Darstellung 4 dynamisch an die jeweils zur Verfügung stehende Größe des sichtbaren oder einsehbaren Bereiches der Anzeigefläche angepasst.

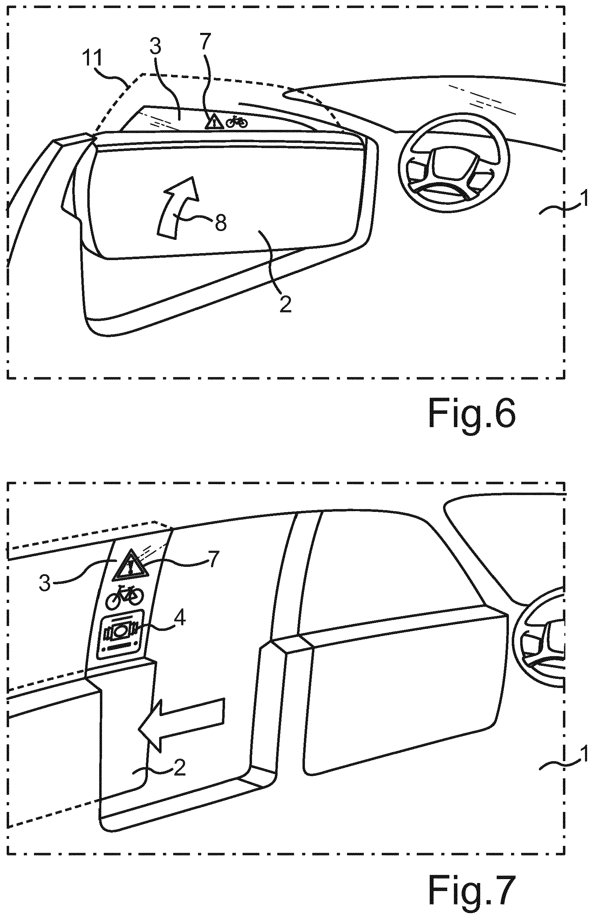

Fig. 6 zeigt eine schematische Perspektivansicht eines Teils eines Kraftfahrzeugs 1, dessen Tür 2 als Scherentür ausgebildet ist. Hier kann beispielweise auch eine Einschränkung der Sichtbarkeit der Darstellung 4 oder der Warnung 7 durch eine Verdeckung durch eine Front- oder Windschutzscheibe oder eine Karosserieteil, beispielsweise eine A-Säule, für eine Anpassung der Anzeige berücksichtigt werden. Ebenso wäre beispielsweise auch eine Flügeltür oder eine sonstige Ausbildung, Anordnung und/oder Lagerung der Tür 2 denkbar. Ansonsten gelten sinngemäß die die zu den übrigen Ausführungsformen gemachten Aussagen.

Fig. 7 zeigt eine ausschnittweise und schematische Perspektivansicht einer Seitenwand eines Kraftfahrzeugs 1, bei dem die Tür 2 als Schiebetür ausgebildet ist. Auch hier gelten entsprechend die zu den übrigen Ausführungsformen angegebenen Aussagen und Erläuterungen.

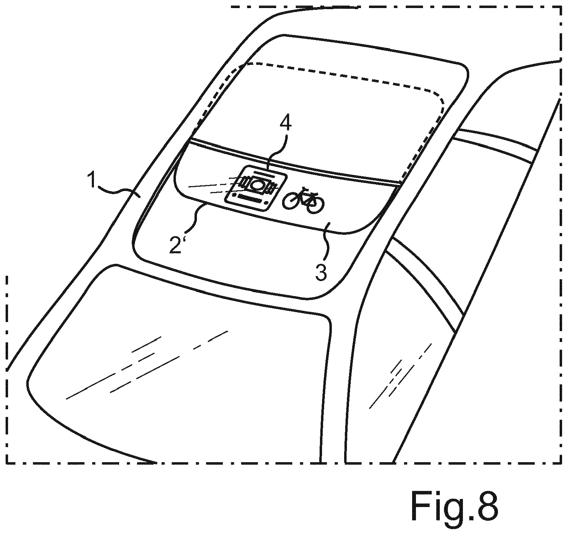

Fig. 8 zeigt eine ausschnittweise und schematische Perspektivansicht auf ein Dach eines Kraftfahrzeugs 1, welches eine Dachöffnung oder ein Dachfenster oder eine Dachluke aufweist. Die Dachöffnung ist verschließbar durch ein Verschlusselement, welches hier als Schiebedach 2' ausgebildet ist und voll- oder teilflächig eine Glasscheibe oder die Fensterscheibe 3 aufweisen kann. Das Schiebedach 2' kann in Fahrzeuglängsrichtung vor und zurück bewegt werden. Die Angaben zu den übrigen Ausführungsformen können sinngemäß auch auf das Schiebedach 2' übertragen werden. Zusätzlich oder alternativ ist auch eine Ausbildung als Kipp- oder Klappdach oder Lagerung denkbar, welche eine Kippen des Schiebedaches 2' oder ein Anstellen in einem Winkel ermöglicht.

Weiterhin können zusätzlich zu der konkret gewählten Ausführungsform prinzipiell auch weitere Anpassungen bei der Steuerung der Darstellung 4 vorgesehen sein. Beispielsweise ist eine Anpassung einer Helligkeit und/oder einer Farbe und/oder einer Konturstärke oder dergleichen denkbar. Auch ist es denkbar, derartige Anpassungen gleichmäßig über die gesamte Fläche der Darstellung 4 vorzunehmen oder einzustellen. Alternativ kann auch eine Einstellung oder Steuerung, insbesondere unter Berücksichtigung des Schwenkwinkels der Tür 2 - oder allgemein des Öffnungsgrads der Verschlusseinrichtung - und/oder der Blickrichtung 6 des Fahrzeuginsassen 5, das heißt einer Betrachtungsperspektive, variabel, bereichsweise oder etwa in oder mit einem kontinuierlichen Verlauf oder mit einem Gradienten möglich sein.

## Patentansprüche

1. Verfahren zum Steuern einer Anzeigevorrichtung für ein Kraftfahrzeug (1), welches einen durch eine Außenhülle gegen eine Umgebung des Kraftfahrzeugs abgegrenzten Fahrgastraum aufweist, wobei die Außenhülle zur Umgebung hin eine Öffnung aufweist und die Öffnung mittels einer beweglichen Verschlusseinrichtung (2, 2') verschließbar ist, und wobei die Anzeigevorrichtung eine Anzeigefläche (3) umfasst, auf der eine Information (4, 7, 10) dargestellt wird, wobei die Anzeigefläche (3) an der beweglichen Verschlusseinrichtung (2, 2') des Kraftfahrzeugs (1) angeordnet ist und eine Darstellung (4) der Information (4, 7, 10) in Abhängigkeit von einem mittels eines Stellungssensors des Kraftfahrzeugs (1) erfassten Öffnungsgrad der Verschlusseinrichtung (2, 2') gesteuert wird,
**dadurch gekennzeichnet, dass**
in Abhängigkeit von dem Öffnungsgrad
- eine Geometrie der Darstellung (4) gesteuert wird und/oder
- ein Inhalt der dargestellten Information (4, 7, 10) gesteuert wird.

2. Verfahren nach Anspruch 1,
**dadurch gekennzeichnet, dass**
eine perspektivische Verzerrung der Darstellung (4) zur Kompensation des Öffnungsgrads bezogen auf eine vorbestimmte Betrachtungsrichtung (6) und/oder einen vorbestimmten Betrachtungsort in Abhängigkeit von dem Öffnungsgrad gesteuert wird.

3. Verfahren nach einem der vorhergehenden Ansprüche,
**dadurch gekennzeichnet, dass**
mittels einer Sensoreinrichtung eine Blickrichtung (6) eines Fahrzeuginsassen (5) erfasst und die Darstellung (4) der Information (4, 7, 10) zur Kompensation des Öffnungsgrads der Verschlusseinrichtung in Abhängigkeit von der erfassten Blickrichtung (6) gesteuert wird.

4. Verfahren nach einem der vorhergehenden Ansprüche,
**dadurch gekennzeichnet, dass**
zumindest ein Teil einer Umgebung des Kraftfahrzeugs (1) mittels einer Umgebungserfassungsvorrichtung des Kraftfahrzeugs (1) erfasst und zumindest ein Teil (10) der erfassten Umgebung auf der Anzeigefläche (3) dargestellt wird.

5. Verfahren nach einem der vorhergehenden Ansprüche,
**dadurch gekennzeichnet, dass**
- zumindest ein Teil (10) einer Umgebung des Kraftfahrzeugs (1) mittels einer Umgebungserfassungsvorrichtung des Kraftfahrzeugs erfasst wird,
- von der Umgebungserfassungsvorrichtung erfasste Daten hinsichtlich einer Kollisionsgefahr ausgewertet werden, und
- im Falle einer erkannten Kollisionsgefahr bei einem Öffnen der Verschlusseinrichtung (2, 2') auf der Anzeigefläche (3) eine Warnung (7) dargestellt wird.

6. Verfahren nach einem der vorhergehenden Ansprüche,
**dadurch gekennzeichnet, dass**
- die Anzeigefläche (3) zwischen wenigstens einer Gebrauchsstellung und einer Nichtgebrauchsstellung verstellbar ist und
- die Anzeigefläche (3), sofern sie sich in der Nichtgebrauchsstellung befindet, beim Öffnen der Verschlusseinrichtung (2, 2') zur Darstellung (4) der Information (4, 7, 10) selbsttätig aus der Nichtgebrauchsstellung in die Gebrauchsstellung verstellt wird.

7. Kraftfahrzeug (1) mit einem durch eine Außenhülle gegen eine Umgebung des Kraftfahrzeugs (1) abgegrenzten Fahrgastraum und mit einer Anzeigevorrichtung, welche eine Anzeigefläche (3) umfasst und zur Darstellung (4) einer Information (4, 7, 10) auf der Anzeigefläche (3) eingerichtet ist, wobei die Außenhülle zur Umgebung hin eine Öffnung aufweist und die Öffnung mittels einer beweglichen Verschlusseinrichtung (2, 2') verschließbar ist, wobei
die Anzeigefläche (3) an der beweglichen Verschlusseinrichtung (2, 2') des Kraftfahrzeugs (1) angeordnet ist, das Kraftfahrzeug (1) einen Stellungssensor zur Erfassung eines Öffnungsgrads der Verschlusseinrichtung (2, 2') umfasst und die Anzeigevorrichtung dazu eingerichtet ist, die Darstellung (4) der Information (4, 7, 10) in Abhängigkeit von dem erfassten Öffnungsgrad zu steuern,
**dadurch gekennzeichnet, dass**
die Anzeigevorrichtung dazu eingerichtet ist, in Abhängigkeit von dem Öffnungsgrad
- eine Geometrie der Darstellung (4) zu steuern und/oder
- einen Inhalt der dargestellten Information (4, 7, 10) zu steuern.

## Claims

1. Method for controlling a display apparatus for a motor vehicle (1) which has a passenger compartment delimited by an outer shell against an environment of the motor vehicle, wherein the outer shell has an opening towards the environment and the opening can be closed by means of a movable closing device (2, 2'), and wherein the display apparatus has a display surface (3) on which an item of information (4, 7, 10) is represented, wherein
the display surface (3) is arranged on the movable closing device (2, 2') of the motor vehicle (1) and a representation (4) of the item of information (4, 7, 10) is controlled depending on an opening degree, detected by means of a position sensor of the motor vehicle (1), of the closing device (2, 2'),
**characterised in that**
depending on the opening degree
- a geometry of the representation (4) is controlled and/or
- a content of the represented item of information (4, 7, 10) is controlled.

2. Method according to claim 1,
**characterised in that**
a perspective distortion of the representation (4) for compensating the opening degree, relating to a predetermined viewing direction (6) and/or a predetermined viewing location, is controlled depending on the opening degree.

3. Method according to any of the preceding claims,
**characterised in that**
by means of a sensor device a view direction (6) of a vehicle occupant (5) is detected and the representation (4) of the item of information (4, 7, 10) for compensating the opening degree of the closing device is controlled depending on the detected view direction (6).

4. Method according to any of the preceding claims,
**characterised in that**
at least a part of an environment of the motor vehicle (1) is detected by means of an environment detecting device of the motor vehicle (1) and at least a part (10) of the detected environment is represented on the display surface (3).

5. Method according to any of the preceding claims,
**characterised in that**
- at least a part (10) of an environment of the motor vehicle (1) is detected by means of an environment detecting device of the motor vehicle,
- data detected by the environment detecting device are evaluated with regard to a collision risk, and
- in the case of a recognised collision risk when opening the closing device (2, 2') a warning (7) is displayed on the display surface (3).

6. Method according to any of the preceding claims,
**characterised in that**
- the display surface (3) can be adjusted between at least a use position and a non-use position and
- the display surface (3), inasmuch as it is in the non-use position, when the closing device (2, 2') is opened, is moved automatically out of the non-use position into the use position for representing (4) the item of information (4, 7, 10).

7. Motor vehicle (1) having a passenger compartment delimited by an outer shell against an environment of the motor vehicle (1) and having a display apparatus which comprises a display surface (3) and is configured to represent (4) an item of information (4, 7, 10) on the display surface (3), wherein the outer shell has an opening towards the environment and the opening can be closed by means of a movable closing device (2, 2'), wherein
the display surface (3) is arranged on the movable closing device (2, 2') of the motor vehicle (1), the motor vehicle (1) includes a position sensor for detecting an opening degree of the closing device (2, 2') and the display apparatus is configured to control the representation (4) of the item of information (4, 7,10) depending on the detected opening degree,
**characterised in that**
the display apparatus is configured, depending on the opening degree,
- to control a geometry of the representation (4) and/or
- to control a content of the item of information (4, 7, 10) represented.

## Revendications

1. Procédé pour commander un dispositif d'affichage pour un véhicule automobile (1), lequel présente un habitacle délimité par une enveloppe extérieure par rapport à un environnement du véhicule automobile, dans lequel l'enveloppe extérieure présente en direction de l'environnement une ouverture et l'ouverture peut être fermée au moyen d'un dispositif de fermeture (2, 2') mobile, et dans lequel le dispositif d'affichage comprend une surface d'affichage (3), sur laquelle une information (4, 7, 10) est représentée, dans lequel
la surface d'affichage (3) est disposée sur le dispositif de fermeture (2, 2') mobile du véhicule automobile (1) et une représentation (4) de l'information (4, 7, 10) est commandée en fonction d'un degré d'ouverture du dispositif de fermeture (2, 2') détecté au moyen d'un capteur de position du véhicule automobile (1),
**caractérisé en ce qu'**
en fonction du degré d'ouverture
- une géométrie de la représentation (47) est commandée et/ou
- un contenu de l'information (4, 7, 10) représentée est commandé.

2. Procédé selon la revendication 1,
**caractérisé en ce qu'**
une distorsion en perspective de la représentation (4) est commandée en fonction du degré d'ouverture pour la compensation du degré d'ouverture par rapport à une direction d'observation (6) prédéfinie et/ou à un degré d'observation prédéfini.

3. Procédé selon l'une quelconque des revendications précédentes,
**caractérisé en ce qu'**
une direction de regard (6) d'un occupant de véhicule (5) est détectée au moyen d'un dispositif de détection et la représentation (4) de l'information (4, 7, 10) est commandée en fonction de la direction de regard (6) détectée pour la compensation du degré d'ouverture du dispositif de fermeture.

4. Procédé selon l'une quelconque des revendications précédentes,
**caractérisé en ce qu'**
au moins une partie d'un environnement du véhicule automobile (1) est détectée au moyen d'un dispositif de détection d'environnement du véhicule automobile (1) et au moins une partie (10) de l'environnement détecté est représentée sur la surface d'affichage (3).

5. Procédé selon l'une quelconque des revendications précédentes,
**caractérisé en ce que**
- au moins une partie (10) d'un environnement du véhicule automobile (1) est détectée au moyen d'un dispositif de détection d'environnement du véhicule automobile,
- des données concernant un risque de collision détectées par le dispositif de détection d'environnement sont évaluées, et
- dans le cas d'un risque de collision détecté, lors d'une ouverture du dispositif de fermeture (2, 2'), un avertissement (7) est représenté sur la surface d'affichage (3).

6. Procédé selon l'une quelconque des revendications précédentes,
**caractérisé en ce que**
- la surface d'affichage (3) peut être déplacée entre au moins une position d'utilisation et une position de non-utilisation et
- la surface d'affichage (3), dans la mesure où elle se trouve dans la position de non-utilisation, lors de l'ouverture du dispositif de fermeture (2, 2'), est déplacée automatiquement de la position de non-utilisation dans la position d'utilisation pour la représentation (4) de l'information (4, 7, 10).

7. Véhicule automobile (1) avec un habitacle délimité par une enveloppe extérieure par rapport à un environnement du véhicule automobile (1) et avec un dispositif d'affichage, lequel comprend une surface d'affichage (3) et est conçu pour la représentation (4) d'une information (4, 7,10) sur la surface d'affichage (3), dans lequel l'enveloppe extérieure présente en direction de l'environnement une ouverture et l'ouverture peut être fermée au moyen d'un dispositif de fermeture (2, 2') mobile, dans lequel
la surface d'affichage (3) est disposée sur le dispositif de fermeture (2, 2') mobile du véhicule automobile (1), le véhicule automobile (1) comprend un capteur de position pour la détection d'un degré d'ouverture du dispositif de fermeture (2, 2') et le dispositif d'affichage est conçu pour commander la représentation (4) de l'information (4, 7, 10) en fonction du degré d'ouverture détecté,
**caractérisé en ce que**
le dispositif d'affichage est conçu, en fonction du degré d'ouverture
- pour commander une géométrie de la représentation (4) et/ou
- pour commander un contenu de l'information (4, 7, 10) représentée.
